# EUROPÄISCHE PATENTSCHRIFT

(11) **EP 1 401 683 B1**
(45) Veröffentlichungstag und Bekanntmachung des Hinweises auf die Patenterteilung: **12.10.2005**
(21) Anmeldenummer: 02754176.2
(22) Anmeldetag: 29.05.2002
(51) Int. Cl.: B60R 21/01

(54) **VORRICHTUNG ZUR KLASSIFIZIERUNG VON PERSONEN ODER OBJEKTEN**
DEVICE FOR CLASSIFYING PERSONS OR OBJECTS
DISPOSITIF DE CLASSIFICATION DE PERSONNES OU D'OBJETS

(30) Priorität: 31.05.2001 DE 10126452
(43) Veröffentlichungstag der Anmeldung: 31.03.2004
(73) Patentinhaber: ROBERT BOSCH GMBH, 70442 Stuttgart (DE)
(72) Erfinder: MARCHTHALER, Reiner, 73333 Gingen (DE); LICH, Thomas, 71409 Schwaikheim (DE); MACK, Frank, 70376 Stuttgart (DE); MEYER, Michael, 71155 Altdorf (DE)
(86) Internationale Anmeldenummer: PCT/DE2002/001971
(87) Internationale Veröffentlichungsnummer: WO 2002/096720

(56) Entgegenhaltungen:
- WO-A-01/18506
- WO-A-01/85497
- WO-A-99/38731
- BILLEN K: "Occupant Classification System for Smart Restraint Systems" SAE PAPER 1999-01-0761, XX, XX, Januar 1999 (1999-01), Seiten 33-38, XP002184965

## Beschreibung

### Stand der Technik

Die Erfindung betrifft eine Vorrichtung zur Klassifizierung von Personen oder Objekten, insbesondere zur Insassenklassifizierung in einem Kraftfahrzeug, beispielsweise gemäß Dokument SAE 1999-01-0761. Diese Vorrichtung umfasst Mittel zum Erfassen von charakteristischen Daten der zu klassifizierenden Person bzw. des zu klassifizierenden Objekts, mindestens einen Algorithmus, der Merkmale aus den aktuell erfassten charakteristischen Daten extrahiert, mindestens einen Filter, der aus den aktuell extrahierten Merkmalen die Klasse der Person bzw. des Objekts ermittelt, wobei die zeitliche Entwicklung der für die zu klassifizierende Person bzw. das zu klassifizierende Objekt extrahierten Merkmale berücksichtigt wird, und einen ersten Zähler, über den das Rücksetzen des Filters initiiert wird, wenn der Algorithmus während des durch den ersten Zähler vorgegebenen ersten Zeitintervalls ausschließlich Merkmale für das Nichtvorhandensein einer Person bzw. eines Objekts geliefert hat.

Die erfindungsgemäße Vorrichtung kann grundsätzlich überall dort eingesetzt werden, wo Personen oder Objekte in irgendeiner Form klassifiziert werden müssen. Die Klassifizierung kann nach ganz unterschiedlichen Kriterien vorgenommen werden, z.B. nach der Größe oder dem Gewicht der Person bzw. des Objekts. Als charakteristische Daten können Daten jeder Art erfasst werden, solange sie Aussagen über das Klassifizierungskriterium zulassen. Soll beispielsweise eine Größenklassifizierung vorgenommen werden, so können charakteristische Daten der zu klassifizierenden Person bzw. des zu klassifizierenden Objekts beispielsweise durch Videosensierung, Ultraschallsensierung oder auch Radarsensierung erfasst werden.

Die erfindungsgemäße Vorrichtung wird nachfolgend beispielhaft anhand einer Gewichtsklassifizierung von Fahrzeuginsassen näher erläutert.

Das Auslösen von Rückhaltemitteln in einem Kraftfahrzeug erfolgt in der Regel in Abhängigkeit von verschiedenen Parametern, wie z.B. der Schwere des Aufpralls sowie der Position und des Gewichts der Insassen. Deshalb werden neben der Sitzbelegung auch charakteristische Daten für jeden einzelnen Insassen erfasst, die Rückschlüsse auf dessen Gewicht zulassen, so dass jedem Insassen eine Gewichtsklasse zugeordnet werden kann. In der Praxis werden zum Erfassen der charakteristischen Daten für eine derartige Insassenklassifizierung Kraftsensoranordnungen eingesetzt, die in den einzelnen Sitzen verbaut sind. Bei den Kraftsensoren kann es sich um Dehnmessstreifen zur direkten Gewichtsmessung handeln. Die Kraftsensoranordnung kann aber auch in Form einer Sensormatte mit druckempfindlichen Sensorzellen realisiert sein, die in einer Matrix angeordnet sind und einzeln angesteuert werden können, so dass sich die Druckverteilung im Sitz in Form einer Wertematrix erfassen lässt. Je schwerer eine Person ist, um so stärker wird das Sitzmaterial eingedrückt und um so größer ist die Anzahl der aktivierten Sensorzellen. Außerdem ist der von einer Sensorzelle erfasste Druckwert per se natürlich abhängig von der jeweiligen Druckbeaufschlagung. Bei der Auswertung der von den einzelnen Sensorzellen der Sensormatte erfassten Druckdaten wird neben den einzelnen Druckwerten also auch die Anzahl der aktivierten Sensorzellen berücksichtigt. Die Auswertung erfolgt durch ein ebenfalls im Sitz verbautes Steuergerät. Das Ergebnis der Auswertung, nämlich die jeweils ermittelte Gewichtsklasse, wird dem Airbagsteuergerät übermittelt, so dass die individuelle Sitzbelegung beim Auslösen der Rückhaltemittel berücksichtigt werden kann. Dieses Verfahren ist weitgehend unabhängig von äußeren Bedingungen, wie Kälte oder Verschleiß.

Bei einer aus der Praxis bekannten Vorrichtungen zur Insassenklassifizierung werden aus den kontinuierlich erfassten Druckdaten mit Hilfe eines entsprechenden Algorithmus Merkmale extrahiert, aus denen dann mit Hilfe eines dem Algorithmus nachgeschalteten Filters die Gewichtsklasse ermittelt wird. Die Filterparameter werden so gewählt und kontinuierlich aktualisiert, dass bei der Auswertung der aktuellen Druckdaten bzw. bei der Filterung der daraus extrahierten Merkmale auch die zeitliche Entwicklung der früher erfassten und ausgewerteten Druckdaten berücksichtigt wird. Die Gewichtsklasse eines Insassen wird ca. alle 0,7s mit den dann aktuellen Druckdaten neu bestimmt. Erkennt der Algorithmus, dass ein Sitz länger als ca. 5s nicht belegt ist, so werden die Filterparameter zurückgesetzt. Dieser Reset wird durch einen einfachen Zähler initiiert, der das Zeitintervall von ca. 5s vorgibt.

Bei der bekannten Vorrichtung wird mit dem Rücksetzen des Filters die Information "Sitz nicht belegt" an das Airbagsteuergerät übermittelt. Sobald das Airbagsteuergerät die Information "Sitz nicht belegt" erhält, werden die Rückhaltemittel für den betreffenden Sitz abgeschaltet, so dass sie bei einem dann eintretenden Crash nicht ausgelöst werden. Dies erweist sich in der Praxis des öfteren als problematisch, insbesondere wenn sich ein Insasse kurzzeitig - aber länger als 5s - von seinem Sitz erhebt, ohne auszusteigen, beispielsweise um während der Fahrt seinen Mantel auszuziehen. In einem solchen Fall wird dem Airbagsteuergerät die Information "Sitz nicht belegt" übermittelt, die Rückhaltemittel werden abgeschaltet und der betreffende Insasse ist solange ungeschützt bzw. unzureichend geschützt, bis dem Airbagsteuergerät wieder ein realistischer Schätzwert für die Gewichtsklasse des Insassen übermittelt wird.

### Vorteile der Erfindung

Mit der vorliegenden Erfindung wird eine Vorrichtung der eingangs genannten Art vorgeschlagen, mit der das Resetverhalten des Algorithmus bzw. des dem Algorithmus nachgeschalteten Filters von der Ausgabe der ermittelten Klasse einfach entkoppelt werden kann.

Dies wird erfindungsgemäß dadurch erreicht, dass dem Filter ein Halteglied für die vom Filter ermittelte Klasse nachgeschaltet ist und dass ein zweiter Zähler vorgesehen ist, über den das Rücksetzen des Halteglieds initiiert wird, wenn der Algorithmus auch nach Ablauf des durch den zweiten Zähler vorgegebenen zweiten Zeitintervalls nur Merkmale für das Nichtvorhandensein einer Person bzw. eines Objekts liefert.

Die Ausgabe der ermittelten Klasse erfolgt erfindungsgemäß über das dem Filter nachgeschaltete Halteglied. Die Haltefunktion des Halteglieds kommt nur dann zum Tragen, wenn der Algorithmus bzw. der Filter zurückgesetzt wird, weil das Nichtvorhandensein einer Person bzw. eines Objekts erkannt worden ist. In diesem Fall kann die zuletzt bestimmte Klasse weiterhin vom Halteglied abgerufen werden, bis auch das Halteglied zurückgesetzt wird oder der Algorithmus erneut Merkmale einer Person bzw. eines Objekts liefert.

Bei einer Insassenklassifizierung, die beim Auslösen von Rückhaltemitteln in einem Kraftfahrzeug berücksichtigt werden soll, kann mit Hilfe des voranstehend beschriebenen Halteglieds dem Fall Rechnung getragen werden, dass sich ein Insasse lediglich kurzzeitig von seinem Sitz erhebt, ohne das Fahrzeug zu verlassen. Auch wenn in diesem Fall der Filter zurückgesetzt wird, weil der Algorithmus die Nichtbelegung des betreffenden Sitzes erkennt, kann dem Airbagsteuergerät weiterhin die zuletzt ermittelte Gewichtsklasse des Insassen übermittelt werden. Erst wenn aufgrund der Dauer der Nichtbelegung von einem Insassenwechsel ausgegangen werden muss, wird auch das Halteglied zurückgesetzt, so dass dem Airbagsteuergerät erst dann die Information "Sitz nicht belegt" übermittelt wird.

Der erfindungsgemäß vorgesehene zweite Zähler, der das Rücksetzen des Halteglieds initiiert, ist unabhängig vom ersten Zähler parametrisierbar, der das Rücksetzen des Filters initiiert. In einer vorteilhaften Variante der erfindungsgemäßen Vorrichtung zur Insassenklassifizierung in einem Kraftfahrzeug initiiert der erste Zähler das Rücksetzen der Filterparameter, wenn der Algorithmus mindestens 3s lang ausschließlich Merkmale für das Nichtvorhandensein einer Person bzw. eines Objekts geliefert hat. Dadurch wird sichergestellt, dass ein Insassenwechsel zuverlässig erkannt wird und die Klassifizierung neu gestartet wird. Der zweite Zähler sollte das Rücksetzen des Halteglieds erst initiieren, wenn der Algorithmus mindestens 20s lang ausschließlich Merkmale für das Nichtvorhandensein einer Person bzw. eines Objekts geliefert hat. Erst dann kann zuverlässig ausgeschlossen werden, dass sich der betreffende Insasse nur kurzzeitig von seinem Sitz erhoben hat, ohne den Sitz zu wechseln oder das Fahrzeug zu verlassen.

### Zeichnung

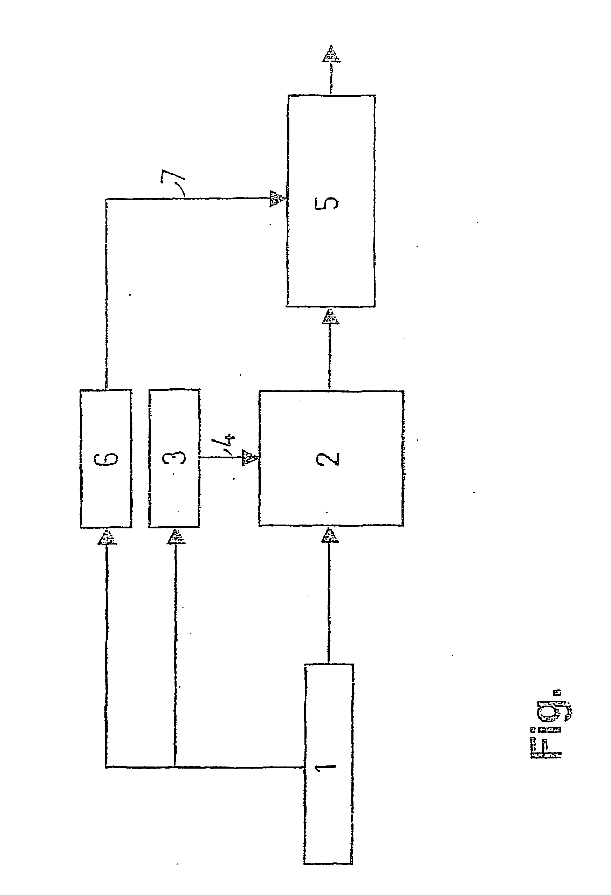

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnung verwiesen.

Die einzige Figur zeigt die Prinzipdarstellung einer erfindungsgemäßen Vorrichtung zur Insassenklassifizierung in einem Kraftfahrzeug.

### Beschreibung des Ausführungsbeispiels

Mit Hilfe der in der einzigen Figur dargestellten Vorrichtung werden die Insassen eines Kraftfahrzeugs hinsichtlich ihres Gewichts klassifiziert. Die jeweils ermittelte Gewichtsklasse wird einem hier nicht dargestellten Airbagsteuergerät zugeführt, so dass diese Information beim Auslösen von Rückhaltemitteln berücksichtigt werden kann.

Die Vorrichtung umfasst eine Drucksensoranordnung in Form einer hier nicht dargestellten, in den jeweiligen Sitz verbauten Sensormatte, mit der sich die Druckverteilung im Sitz kontinuierlich erfassen lässt. Die erfasste Druckverteilung wird einem Algorithmus 1 der Vorrichtung zugeführt, der aus der erfassten Druckverteilung Merkmale extrahiert, aus denen auf die Gewichtsklasse des betreffenden Insassen geschlossen werden kann. Dem Algorithmus 1 ist ein Filter 2 nachgeschaltet, der eine zeitliche Mittelung über die aus den letzten Druckverteilungen extrahierten Merkmalen durchführt, sofern kein Insassenwechsel stattgefunden hat. Die Filterparameter des Filters 2 werden also durch die Historie der extrahierten Merkmale bestimmt.

Wenn der Algorithmus 1 erstmals die Information "Sitz nicht belegt" liefert, dann wird ein erster Zähler 3 aktiviert. Dieser Zähler 3 sendet ein Resetsignal 4 an den Filter 2 und initiiert so das Rücksetzen der Filterparameter, wenn der Algorithmus 1 während des durch den Zähler 3 vorgegebenen Zeitintervalls - hier 5s lang - ausschließlich die Information "Sitz nicht belegt" geliefert hat.

Die mit Hilfe des Algorithmus 1 und des Filters 2 aus der erfassten Druckverteilung ermittelte Gewichtsklasse wird erfindungsgemäß über ein dem Filter 2 nachgeschaltetes Halteglied 5 an das Airbagsteuergerät übermittelt. Das Halteglied 5 übermittelt auch dann noch die letzte ermittelte Gewichtsklasse an das Airbagsteuergerät, wenn der Algorithmus 1 bereits die Information "Sitz nicht belegt" geliefert hat und der Filter 2 zurückgesetzt wird. Zum Rücksetzen des Halteglieds 5 ist ein zweiter Zähler 6 vorgesehen, der ebenfalls aktiviert wird, wenn der Algorithmus 1 erstmals die Information "Sitz nicht belegt" liefert. Der Zähler 6 initiiert durch Aussenden eines entsprechenden Resetsignals 7 das Rücksetzen des Halteglieds 5 erst, wenn der Algorithmus 1 während des durch den zweiten Zähler 6 vorgegebenen Zeitintervalls - hier 20s lang - ausschließlich die Information "Sitz nicht belegt" geliefert hat. Erst dann kann sicher davon ausgegangen werde, dass ein Wechsel in der Sitzbelegung stattgefunden hat.

Erfindungsgemäß sind der erste Zähler 3 und der zweite Zähler 6 unabhängig voneinander parametrisierbar. Der erste Zähler 3 sorgt für einen Reset des Algorithmus 1 bzw. des Filters 2, wenn der betreffende Sitz nicht belegt ist, während der zweite Zähler 6 die letzte ermittelte Gewichtsklasse weiter an das Airbagsteuergerät übermittelt. Durch die Entkopplung des Algorithmus 1 bzw. des Filters 2 von der Ausgabe wird sichergestellt, dass der Algorithmus 1 bei einer Neubelegung des Sitzes sofort weiterarbeitet und einen neue Klassifizierung durchführt. Tritt jedoch der Fall ein, dass der Sitz nur kurzfristig unbelegt ist, so wird über den zweiten Zähler 6 sichergestellt, dass der Insasse trotzdem noch beim Auslösen der Rückhaltemittel berücksichtigt wird, da die für ihn ermittelte Gewichtsklasse weiterhin an das Airbagsteuergerät übermittelt wird.

## Patentansprüche

1. Vorrichtung zur Klassifizierung von Personen oder Objekten, insbesondere zur Insassenklassifizierung in einem Kraftfahrzeug, umfassend
- Mittel zum Erfassen von charakteristischen Daten der zu klassifizierenden Person bzw. des zu klassifizierenden Objekts,
- mindestens einen Algorithmus (1), der Merkmale aus den aktuell erfassten charakteristischen Daten extrahiert,
- mindestens einen Filter (2), der aus den aktuell extrahierten Merkmalen die Klasse der Person bzw. des Objekts ermittelt, wobei die zeitliche Entwicklung der für die zu klassifizierende Person bzw. das zu klassifizierende Objekt extrahierten Merkmale berücksichtigt wird, und
- einen ersten Zähler (3), über den das Rücksetzen des Filters (2) initiiert wird, wenn der Algorithmus während des durch den ersten Zähler (3) vorgegebenen ersten Zeitintervalls ausschließlich Merkmale für das Nichtvorhandensein einer Person bzw. eines Objekts geliefert hat,
**dadurch gekennzeichnet, dass** dem Filter (2) ein Halteglied (5) für die vom Filter (2) ermittelte Klasse nachgeschaltet ist und dass ein zweiter Zähler (6) vorgesehen ist, über den das Rücksetzen des Halteglieds (5) initiiert wird, wenn der Algorithmus (1) auch nach Ablauf des durch den zweiten Zähler (6) vorgegebenen zweiten Zeitintervalls nur Merkmale für das Nichtvorhandensein einer Person bzw. eines Objekts liefert.

2. Vorrichtung nach Anspruch 1, **dadurch gekennzeichnet, dass** die Mittel zum Erfassen von charakteristischen Daten der zu klassifizierenden Person bzw. des zu klassifizierenden Objekts Mittel zur Videosensierung, Ultraschallsensierung oder Radarsensierung umfassen.

3. Vorrichtung nach einem der Ansprüche 1 oder 2, **dadurch gekennzeichnet, dass** die Mittel zum Erfassen von charakteristischen Daten der zu klassifizierenden Person bzw. des zu klassifizierenden Objekts Dehnmessstreifen zur Bestimmung des absoluten Gewichts oder eine Drucksensoranordnung zur Bestimmung der Druckverteilung in der Auflagefläche umfassen.

4. Vorrichtung nach Anspruch 3, **dadurch gekennzeichnet, dass** die Person bzw. das Objekts hinsichtlich ihres bzw. seines Gewichts klassifiziert wird.

5. Vorrichtung zur Insassenklassifizierung in einem Kraftfahrzeug nach einem der Ansprüche 1 bis 4, **dadurch gekennzeichnet, dass** der erste Zähler (3) das Rücksetzen des Filters (2) initiiert, wenn der Algorithmus (1) mindestens 3s lang ausschließlich Merkmale für das Nichtvorhandensein einer Person bzw. eines Objekts geliefert hat.

6. Vorrichtung zur Insassenklassifizierung in einem Kraftfahrzeug nach einem der Ansprüche 1 bis 5, **dadurch gekennzeichnet, dass** der zweite Zähler (6) das Rücksetzen des Halteglieds (5) initiiert, wenn der Algorithmus (1) mindestens 20s lang ausschließlich Merkmale für das Nichtvorhandensein einer Person bzw. eines Objekts geliefert hat.

## Claims

1. Apparatus for classification of persons or objects, in particular for occupant classification in a motor vehicle, comprising
- means for detection of characteristic data for the person to be classified or for the object to be classified,
- at least one algorithm (1), which extracts features from the currently detected characteristic data,
- at least one filter (2) which uses the currently extracted features to determine the class of the person or of the object, taking into account the progress over time of the features extracted for the person to be classified or for the object to be classified, and
- a first counter (3), via which the resetting of the filter (2) is initiated when the algorithm has produced exclusively features for the absence of any person or of any object during the first time interval which is predetermined by the first counter (3),
**characterized in that** the filter (2) is followed by a hold element (5) for the class determined by the filter (2), and **in that** a second counter (6) is provided, via which the resetting of the hold element (5) is initiated when the algorithm (1) produces only features for the absence of any person or of any object after the second time interval, which is predetermined by the second counter (6) has elapsed.

2. Apparatus according to Claim 1, **characterized in that** the means for detection of characteristic data for the person to be classified or for the object to be classified comprise means for video sensing, ultrasound sensing or radar sensing.

3. Apparatus according to one of Claims 1 or 2, **characterized in that** the means for detection of characteristic data for the person to be classified or for the object to be classified comprise strain gauges for determination of the absolute weight, or a pressure sensor arrangement for determination of the pressure distribution over the contact surface.

4. Apparatus according to Claim 3, **characterized in that** the person or the object is classified on the basis of his, her or its weight.

5. Apparatus for occupant classification in a motor vehicle according to one of Claims 1 to 4, **characterized in that** the first counter (3) initiates the resetting of the filter (2) when the algorithm (1) has produced exclusively features for the absence of any person or of any object for a period of at least 3 seconds.

6. Apparatus for occupant classification in a motor vehicle according to one of Claims 1 to 5, **characterized in that** the second counter (6) initiates the resetting of the hold element (5) when the algorithm (1) has produced exclusively features for the absence of any person or of any object for a period of at least 20 seconds.

## Revendications

1. Dispositif pour le classement de personnes ou d'objets, en particulier pour le classement d'occupants dans un véhicule automobile, comprenant :
- des moyens pour saisir des données caractéristiques de la personne à classer ou de l'objet à classer,
- au moins un algorithme (1) qui extrait des indices des données caractéristiques actuellement saisies,
- au moins un filtre (2) qui, à partir des indices actuellement extraits, détermine la classe de la personne ou de l'objet, avec prise en compte du développement dans le temps des indices extraits pour la personne à classer ou pour l'objet à classer, et
- un premier compteur (3) par l'intermédiaire duquel la remise à zéro du filtre (2) est déclenchée lorsque l'algorithme a fourni exclusivement des indices significatifs de l'absence d'une personne ou d'un objet pendant un premier intervalle de temps prédéterminé par le premier compteur (3),
**caractérisé en ce qu'**
un organe de maintien (5) pour la classe déterminée par le filtre (2) est placé en aval du filtre (2) et il est prévu un second compteur (6) au moyen duquel la remise à zéro de l'organe de maintien est déclenchée lorsque l'algorithme (1) fournit encore exclusivement des indices significatifs de l'absence d'une personne ou d'un objet même après l'écoulement du second intervalle de temps prédéterminé par le second compteur (6).

2. Dispositif selon la revendication 1,
**caractérisé en ce que**
les moyens destinés à saisir des données caractéristiques de la personne à classer ou de l'objet à classer comprennent des moyens de saisie vidéo, de saisie par ultrasons ou de saisie par radar.

3. Dispositif selon une des revendications 1 ou 2,
**caractérisé en ce que**
les moyens destinés à saisir des données caractéristiques de la personne à classer ou de l'objet à classer sont des jauges de contrainte destinées à déterminer le poids absolu ou un dispositif de capteur de pression destiné à déterminer la répartition de la pression dans la surface de portée.

4. Dispositif selon la revendication 3,
**caractérisé en ce que**
la personne ou l'objet est classé d'après son poids.

5. Dispositif pour le classement d'occupants dans un véhicule automobile selon une des revendications 1 à 4,
**caractérisé en ce que**
le premier compteur (3) est déclenché par la remise à zéro du filtre (2) lorsque l'algorithme (1) a fourni exclusivement des indices significatifs de l'absence d'une personne ou d'un objet pendant au moins 3 s.

6. Dispositif pour le classement d'occupants dans un véhicule automobile selon une des revendications 1 à 5,
**caractérisé en ce que**
le second compteur (6) déclenche la remise à zéro de l'organe de maintien (5) lorsque l'algorithme (1) a fourni exclusivement des indices significatifs de l'absence d'une personne ou d'un objet pendant au moins 20s.
